Europäisches Patentamt

European Patent Office

Office européen des brevets

(19)

(11) Veröffentlichungsnummer: **0 297 023**
**A2**

(12) **EUROPÄISCHE PATENTANMELDUNG**

(21) Anmeldenummer: 88730086.1

(22) Anmeldetag: 15.04.88

(51) Int. Cl.⁴: **H 04 M 1/03**

(30) Priorität: 24.06.87 DE 3721230

(43) Veröffentlichungstag der Anmeldung:
28.12.88 Patentblatt 88/52

(84) Benannte Vertragsstaaten:
AT BE CH DE ES FR GB GR IT LI LU NL SE

(71) Anmelder: KRONE Aktiengesellschaft
Beeskowdamm 3-11
D-1000 Berlin 37 (DE)

(72) Erfinder: Laube, Klaus
Eilertstrasse 28
D-1000 Berlin 37 (DE)

Hoffmann, Thomas
Sächsische Strasse 22
D-1000 Berlin 31 (DE)

Nad, Ferenc
Leinestrasse 1
D-1000 Berlin 44 (DE)

(54) Handapparat für einen Fernsprechapparat.

(57) Die Erfindung bezieht sich auf einen Fernsprechapparat, aus einem Kunststoffgehäuse mit im Gehäuse angeordneten elektro-akustischen Wandlern (4,5), deren Membranen (13,14) durch Schallführungskanäle (6) zur Aufnahme/Abgabe von Schallwellen zur äußeren Umgebung zugänglich sind.

Um bei einer Ablage des Handapparates (1) auf einer ebenen Unterlage (7) die Schallübertragung von der Hörkapsel (10) zur Sprechkapsel (12) zu reduzieren, so daß eine größere Umlaufdämpfung erzielt wird, münden die Schallführungskanäle (6) mindestens eines Wandlers (4,5) in einer ebenen Auflagefläche (3), die bei Ablage des Handapparates auf der ebenen Unterlage (7) plan aufliegt und die Schallführungskanäle (6) verschließt.

FIG.1

**Beschreibung**

## Handapparat für einen Fernsprechapparat

Die Erfindung bezieht sich auf einen Handapparat für einen Fernsprechapparat gemäß dem Oberbegriff des Anspruches 1.

Handapparate für Fernsprechapparate sind in verschiedenen Ausführungsformen bekannt. Aus der DE-OS 34 20 586 ist ein Handapparat mit aus elektro-akustischen Wandlern gebildeten Hör- und Sprechkapseln vorbekannt. In der Gesprächspause kann dieser Handapparat auf einer Unterlage, z.B. auf einer Tischplatte, abgelegt werden. In dieser Position wird zwischen der Unterlage und den Außenflächen des der Unterlage zugewandten und die Schallführungskanäle aufweisenden Gehäuseteils des Handapparates ein keilförmiger Zwischenraum gebildet. Dieser Zwischenraum bewirkt aufgrund des Schallaustritts an der Hörkapsel eine Verstärkung der Schallwellen, so daß die auf die Sprechkapsel auftreffenden Schallwellen im ungünstigsten Fall eine Selbsterregung bzw. ein Pfeifen im Rückkopplungsweg verursachen. Besonders bei modern gestalteten Handapparaten, bei denen die Schallübertragung sowohl durch kleiner werdende Abstände zwischen Hör- und Sprechkapsel als auch durch einen breiteren Griffteil verstärkt wird, besteht eine erhöhte Gefahr einer Rückkopplung.

Der Erfindung liegt von daher die Aufgabe zugrunde, einen Handapparat der gattungsgemäßen Art zu schaffen, bei dessen Ablage auf einer ebenen Unterlage die Schallübertragung von der Hörkapsel zur Sprechkapsel reduziert wird, so daß eine größere Umlaufdämpfung erzielt wird.

·Die Lösung dieser Aufgabe ergibt sich aus den kennzeichnenden Merkmalen des Anspruches 1. Erfindungsgemäß wird durch das Schließen der Schallführungskanäle mindestens eines Wandlers erreicht, daß bei auf eine ebene Fläche abgelegtem Handapparat eine Schallübertragung von der Hörkapsel zur Sprechkapsel verhindert wird, so daß eine Rückkopplung ausgeschlossen ist. Hierbei kann sowohl an der Gehäuseaußenwand der Sprechkapsel als auch an der Gehäuseaußenwand der Hörkapsel eine ebene Auflagefläche ausgebildet sein.

Eine weitere vorteilhafte Ausgestaltung der Erfindung ergibt sich aus dem Unteranspruch. Die Ausgestaltung der ebenen Auflagefläche mit einem konkaven Mittelteil bewirkt, daß beim Ablegen des Handapparates auf einer ebenen Fläche eine besondere Lagesicherung und Kippstabilität erreicht wird.

Die Erfindung ist nachfolgend anhand von zwei in den Zeichnungen dargestellten Ausführungsbeispielen eines Handapparates näher erläutert. Es zeigen:

Fig. 1 eine Seitenansicht des ersten Ausführungsbeispieles, teilweise in einer Schnittdarstellung,

Fig. 2 die Draufsicht auf die Schallführungskanäle der Sprech- und Hörkapseln, nach Fig. 1,

Fig. 3 eine Seitenansicht des zweiten Ausführungsbeispieles und

Fig. 4 die Draufsicht auf die Schallführungskanäle der Sprech- und Hörkapseln nach Fig. 2.

In dem aus mindestens zwei Kunststoffteilen bestehenden Handapparat 1 sind zwei elektro-akustische Wandler 4,5 in zwei Lagern 8,9 fixiert. Die Wandler 4,5 bestehen aus einer Hörkapsel 10 bzw. einer Sprechkapsel 11. Im Bereich der Hörkapsel 10 und der Sprechkapsel 11 sind im Kunststoffgehäuse des Handapparates 1 an der Gehäuseaußenwand 2 Schallführungskanäle 6 vorgesehen, die im Ausführungsbeispiel aus mehreren nebeneinander angeordneten Schlitzen 12 bestehen. Diese Schallführungskanäle 6 bewirken, daß die Membranen 13,14 der Hörkapsel 10 bzw. der Sprechkapsel 11 zur äußeren Umgebung zugänglich sind. So kann die durch die Membran 13 der Hörkapsel 10 in Schwingungen versetzte Luft durch die Schallführungskanäle 6 Schall nach außen abstrahlen und auf die Membran 14 der Sprechkapsel 11 übertragen. Hierbei kann es zu einer Selbsterregung bzw. zu einem Pfeifton kommen. Die nicht dargestellte Apparateschaltung bildet den Rückkopplungskreis, der aus verschiedenen Verstärkungen und Dämpfungen besteht und eine Umlaufdämpfung bewirkt, die noch um einen Sicherheitsabstand von der Pfeifgrenze entfernt ist.

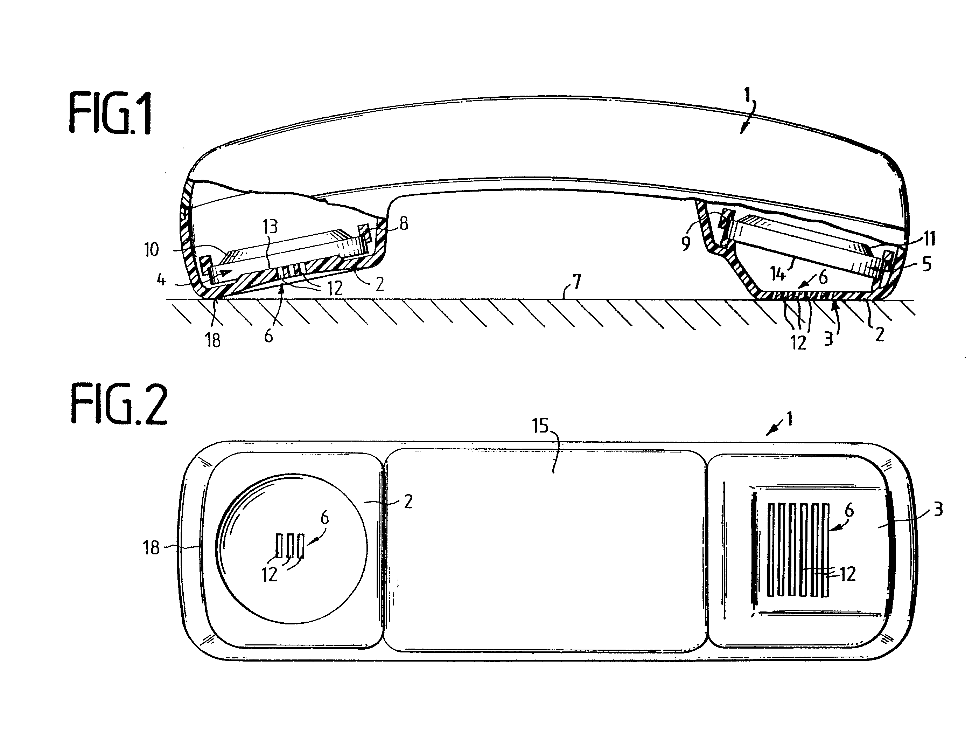

Wird der Handapparat 1, wie in der Fig. 1 dargestellt, auf einer ebenen Unterlage 7 abgelegt, so wird der Schalldruckpegel am Ort der Sprechkapsel 11, hervorgerufen durch die Abstrahlung der Hörkapsel 10, erheblich vergrößert. Besonders bei Handapparaten gemäß Fig. 1 mit einem kleinen Abstand zwischen Hör- und Sprechkapsel 10,11 und einem breiten Griffteil 15 besteht eine erhöhte Gefahr einer Ruckkopplung. Erfindungsgemäß ist, wie in den Figuren 1 und 2 dargestellt, an der mit den Schallführungskanälen 6 versehenen äußeren Gehäusewand 2 der Sprechkapsel 11 eine ebene Auflagefläche 3 angeordnet, die bei Ablage des Handapparates 1 auf der Unterlage 7 plan aufliegt und somit die Schallführungskanäle 6 der Sprechkapsel 11 verschließt. Eine akustische Rückkopplung wird somit ausgeschlossen, da die Umlaufdämpfung um ca. 10 dB erhöht wird.

An der äußeren Gehäusewand 2 der Hörkapsel 10 liegt der Handapparat 1 nur auf einer äußeren Kante 18 auf.

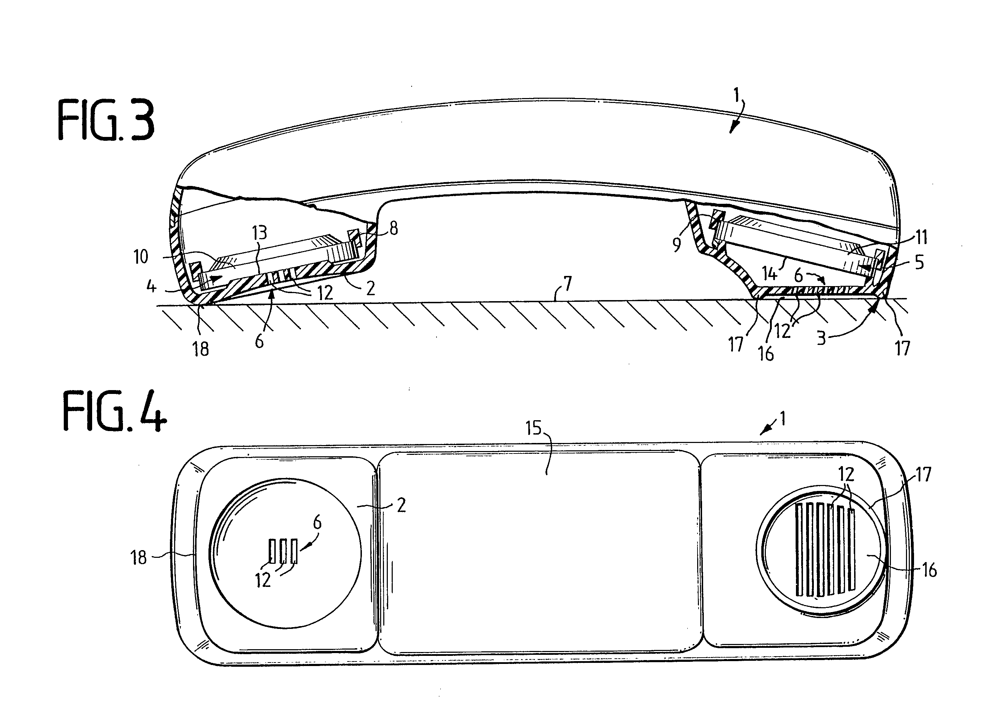

In einer zweiten Ausführungsform gemäß den Figuren 3 und 4 besitzt die ebene Auflagefläche 3 des Handapparates 1 ein konkaves Mittelteil 16 mit einer Ringauflage 17 auf der Sprechkapselseite.

Die plane Ablage kann sowohl auf der Sprechkapselseite als auf der Hörkapselseite erfolgen (nicht dargestellt).

**Patentansprüche**

1. Handapparat für einen Fernsprechapparat, aus einem Kuststoffgehäuse mit im Gehäuse angeordneten elektro-akustischen Wandlern, deren Membranen durch Schallführungskanäle zur Aufnahme/Abgabe von Schallwellen zur äußeren Umgebung zugänglich sind,

**dadurch gekennzeichnet,**

daß die Schallführungskanäle (6) mindestens eines Wandlers (4,5) in einer ebenen Auflagefläche (3) des Handapparates (1) münden, die bei dessen Ablage auf einer ebenen Unterlage (7) plan aufliegt und die Schallführungskanäle (6) verschließt.

2. Handapparat nach Anspruch 1,

**dadurch gekennzieichnet,**

daß die ebene Auflagefläche (3) ein konkaves Mittelteil (16) mit einer Ringauflage (17) aufweist.

3. Handapparat nach Anspruch 1,

**dadurch gekennzeichnet,**

daß die ebene Auflagefläche (3) des Handapparates (1) an der äußeren Gehäusewand (2) der Sprechkapsel (11) vorgesehen ist.

4. Handapparat nach Anspruch 1,

**dadurch gekennzeichnet,**

daß die ebene Auflagefläche (3) zur Verhinderung der akustischen Rückkopplung verwendet wird.

# FIG.1

# FIG.2

FIG.3

FIG.4

0297023